# EUROPEAN PATENT SPECIFICATION

(11) **EP 1 432 665 B1**
(45) Date of publication and mention of the grant of the patent: **01.08.2007**
(21) Application number: 02779295.1
(22) Date of filing: 03.09.2002
(51) Int. Cl.: C04B 40/00

(54) **METHOD FOR THE MANUFACTURE OF STONE PRODUCTS, PARTICULARLY OF SLABS PROVIDED WITH A VEINED EFFECT**
VERFAHREN ZUR HERSTELLUNG VON STEINPRODUKTEN, INSBESONDERE VON PLATTEN MIT MARMORIERTEM EFFEKT
PROCEDE DE FABRICATION DE PRODUITS EN PIERRE, NOTAMMENT DE DALLES PRESENTANT UN EFFET VEINE

(30) Priority: 24.09.2001 IT TV20010130
(43) Date of publication of application: 30.06.2004
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Agostini, Agostino
(86) International application number: PCT/EP2002/009828
(87) International publication number: WO 2003/027042

(56) References cited:
- WO-A-98/06680
- GB-A- 2 050 233
- US-A- 5 643 509
- US-A- 5 855 958
- CHEMICAL ABSTRACTS, vol. 82, no. 6, 10 February 1975 (1975-02-10) Columbus, Ohio, US; abstract no. 34539r, page 227; XP000402475 & JP 49 027100 A (Y. NISHIOKA, ET AL.) 11 March 1974 (1974-03-11)

## Description

The present invention relates to the manufacture of stone conglomerate products, in particular slabs with a veined effect.

For some years now methods for the manufacture of products in the form of slabs or tiles have been known and industrially applied, whereby an initial mix consisting of a granulate, preferably natural stone material, and a binder, consisting of a cement or synthetic resin, is prepared.

This mix is poured onto a forming surface or support, preferably in the form of a tray-like mould made of elastomer material such as rubber.

Then the layer of mix deposited is subjected to a step of vibrocompaction under vacuum operation, i.e. an operation where a pressing action is accompanied by the application of a vibratory movement of predefined frequency and predefined duration, the whole process being performed under a vacuum of a predefined degree.

Then the "raw" product thus formed undergoes a hardening step which depends on the nature of the binder.

When the binder is of the cement type, there is a first setting stage followed by a second stage involving actual hardening in the manner typical of cementitious products.

When, on the other hand, the binder consists of a resin, for example an epoxy or polyester resin, the hardening step takes place preferably as a result of thermal action or even more preferably with the aid of a suitable catalyst.

The tile or slab products thus obtained have a uniform appearance which is reminiscent of the appearance of the stone material from which the granulate used for preparation of the initial mix was obtained.

In many cases, however, it is desirable to provide the surface of the slab which is intended to remain visible with a particular chromatic effect, called "veined" effect, which resembles even more closely the natural stone material.

In the past, in order to obtain chromatic effects which are similar to veining, a dye was added by means of a special metering device to the mix, conveyed on a conveyor belt, (as described and claimed in European patent application EP 0 970 790) consisting of a cylinder having different cavities formed in its external surface and arranged underneath a hopper which is in turn filled with the desired dye.

Upon rotation of the aforementioned cylinder, the abovementioned cavities are filled with dye when they are in front of the outlet of the hopper and discharge the dye on top of the mix which, as already mentioned, is deposited on a conveyor belt moving underneath the metering device, so that when the cavity containing the dye is directed downwards the dye is poured on top of the mix.

The mix then passes to a so-called "plunger" device which performs a horizontal reciprocating movement and has the function of uniformly filling the tray mould with the mix from the conveyor belt. At the same time the dye is mixed uniformly with the mix such that, in the end product, the distribution of the added dye is uniform and homogeneous, to the detriment, therefore, of the desired veined effect.

It is thus desirable, and therefore constitutes the main object of the present invention, to provide a method which, within the confines of the technology for the production of slabs consisting of stone conglomerate as described above, produces an aesthetic effect of the veined type distributed in a non-homogeneous manner on the surface of the end product which is intended to remain visible and where moreover the veined effect persists even after execution of finishing operations, such as sizing and polishing, which involve the removal of some material from the surface of the raw product.

It has now been found that this main object is achieved by a method for the manufacture of slab-type products from a mix consisting of a granulate of natural stone material and a cementitious or synthetic resin binder with the characteristics recited in the appended claims.

According to the invention, unlike the prior known art, the application of the dye is performed after the starting mix has been deposited on the temporary support and in particular on the tray mould: therefore, it is envisaged that the tray mould or other temporary support is firstly brought into a station for metered filling of the forming mould with the starting mix, in the form of a layer of uniform thickness.

Then the forming mould, containing the layer of mix, is brought underneath a dye distribution/metering device, of the type specified here below, so that the dye is distributed in form of patches or blotches, avoiding localised agglomerations.

In the subsequent work stations, the previously mentioned steps take place, namely the application of the covering layer of the tray mould, the vibrocompaction under vacuum and the hardening of the product,.

As indicated in the definition of the invention given above, the dye may be either in liquid or in powder form.

In a first embodiment of the invention, which is particularly suitable when a synthetic resin is the binder of the starting mix, a very fluid liquid dye is used. In this case, a liquid monomer is used as a dye which is compatible, in particular reactive, with the binding resin. For example, if the binder of the mix is a polyester resin, the said monomer is preferably styrene, which is dyed beforehand in a known manner, for example by means of the addition of a pigment, in order to provide it with the desired colour.

During this step a catalyst is not added to the dye, so as to prevent the dye undergoing premature catalysis in the feeding reservoir, in the pipes transferring it to the spraying nozzle and in the spraying nozzle itself.

Alternatively, instead of pure monomer styrene, it is possible to use a mixture of a binding resin and a liquid monomer. In the example considered here it is possible to use a mixture comprising polyester resin and monomer styrene (for example a mixture consisting of 35% monomer styrene and 65% polyester resin).

Therefore, in more general terms, the liquid dye to be used in the present invention is chosen from any of the following : vinyl monomers, in particular styrene; acrylic monomers, in particular methyl methacrylate; polyester resins and acrylic resins, ensuring, in the case of resins, that their viscosity is controlled so that it is suitable for a spraying process. Obviously each of the aforementioned components must be dyed with the desired colour, for example by means of the addition of a suitable pigment.

As here above mentioned, mixtures of the said components, in particular mixtures of a resin and a monomer, are also contemplated by the present invention.

This dye is then sprayed in blotches or patches on top of the mix present in the forming mould, avoiding the formation of localised agglomerations.

It also possible to use several spraying nozzles, simultaneously or in sequence, so that each nozzle supplies a specific dye.

Since the mix is soft, the liquid dye penetrates inside it with ease, reaching a certain depth. Before performing the vibrocompaction, it is preferable to subject the surface of the mix to the action of pointed elements, for example using a tool similar to a rake made to perform a roto-translatory/undulating movement, so that the tips, sinking into the top part of the mix, perform a remixing action also deep down inside the mix. The result of this treatment is that the coloured blotches or patches formed by the dye deposited on the surface spread and assume a veined effect.

After the subsequent vibrocompaction and catalytic hardening steps, the resultant product has veins very similar to those of natural stone, which veins remain even after the sizing and smoothing operations of the slab.

The advantageous results obtained with this embodiment seem to be mainly due the fact that, during catalytic hardening of the slab or product, the catalytic action is also exerted on the monomer which forms the base of the dye, said monomer being crosslinked together with the binder and retained *in situ.*

In accordance with a second embodiment of the present invention, which is preferably utilized for the formation of veins in stone products where the starting mix comprises a cementitious binder, the dye is used in solid form, particularly in powder form.

Preferably an inert solid, which may consist of the same granulate used to form the starting mix, is added to the dye.

For example, in the case of a starting mix formed with sand or quartz granulate, the same granulate having dimensions ranging from 0.1 - 0.3 mm in a weight ratio of 1:10 may be added to the dye in order to obtain a satisfactory distribution and at the same time the desired veined effect.

In the industrial implementation of this embodiment of the present invention, it is envisaged using a plunger device of the above mentioned type in order to form the layer of starting mix, devoid of dye, either on the said temporary support or - preferably - on the tray mould, while a random and patch-like distribution of the dye is subsequently performed using a metering device which is preferably, though not necessarily, of the type briefly described here above.

For implementing these steps of the method according to the present invention it may be envisaged using a movable plunger device, while the temporary support (such as a conveyor belt, for example) or the tray mould, remain stationary until the filling with a layer of uniform thickness of the starting mixx has been completed.

For the subsequent step involving the random and patch-like distribution of the dye it is alternatively possible either to remove the plunger device and replace it with a dye metering device of the type indicated above, which is movable along the temporary support or the tray mould, or to subject the temporary support or tray mould to a displacement, at a controlled speed, underneath the metering device, which in this case remains stationary.

The temporary support or tray mould is then conveyed away for the subsequent steps of the method, namely vibrocompaction under vacuum and setting and hardening.

According to a further variant of the present invention, after the formation of the non-coloured layer of mix on the temporary support or tray mould, but before application of the solid or liquid dye, the surface of the layer of mix may be subjected to a step involving the formation of irregular grooves or roughness, which causes the distribution of the dye also to become even more irregular and random.

This latter effect may be obtained, for example, by treating the surface of the mix with a comb or rake-like tool, preferably adapted to perform a roto-translatory/undulating movement imparted by the temporary support or tray mould.

From the tests carried out with the method according to the present invention it has been possible not only to assess that the desired veined effect is obtained in the finished slab, but also that said effect remains after the conventional subsequent steps involving sizing and polishing of the slab.

The invention has been described with reference to preferred embodiments, it being understood that conceptually and mechanically equivalent modifications and variants are possible and may be envisaged without departing from the scope of the appended claims.

This is in particular applicable for the step involving filling of the tray mould with a layer of initial mix having a uniform thickness (namely deposition onto a temporary forming support for said layer) and for the step involving metered distribution of dye in patches and randomly on the surface of the mix layer.

## Claims

1. Method for the manufacture of slab-type products from a mix consisting of a granulate of natural stone material and a cementitious or synthetic resin binder, in which a layer of mix is formed on a temporary forming support, preferably a rubber tray-like mould, and the layer is subjected to vibrocompaction under vacuum and then to the setting and hardening steps depending on the nature of the binder, **characterized in that**, prior to the vibrocompaction and hardening steps, the dye, in a form chosen from a liquid dye and powder dye, is distributed onto the upper surface of the starting mix, which is in turn distributed in the form of a layer of uniform thickness on the tray mould or other forming support, the distribution of the dye being random and in patches and being performed in such a way that the dye does not form agglomerations but is dispersed.

2. Method according to Claim 1, **characterized in that** said dye is chosen from a liquid dye and a solid dye in powder form.

3. Method according to Claim 2, **characterized in that** said dye is in liquid form and is used when the binder forming the starting mix is a resin.

4. Method according to Claim 3, **characterized in that** said liquid dye is a very fluid compound, compatible with said binding resin, previously dyed in a known manner so as to provide it with the desired colour.

5. Method according to Claim 4, **characterized in that** said very fluid compound is reactive with the binding resin.

6. Method according to Claim 4, **characterized in that** said liquid dye is chosen from any of the following : vinyl monomers, acrylic monomers, polyester resins and acrylic resins, as well as mixtures thereof, said resins having a viscosity suitable for the requirements of application by means of spraying.

7. Method according to Claim 4 or 5, **characterized in that** said liquid dye consists of a mixture of dyed monomer and said binding resin.

8. Method according to Claim 7, **characterized in that** said monomer is styrene and said binding resin is polyester resin.

9. Method according to Claim 8, **characterized in that** said liquid dye consists of a mixture comprising 35% of monomer styrene and 65% polyester resin.

10. Method according to Claim 2, **characterized in that** a hardening catalyst is not added beforehand to said liquid dye which instead uses, for hardening, the catalyst of the binding resin forming the starting mix.

11. Method according to Claim 2, **characterized in that**, before performing a vibrocompaction, but after the application of the liquid dye distributed in the form of patches or blotches on the surface of the layer of mix deposited in the mould or temporary forming support, the surface of the mix is subjected to the action of pointed elements which are sunk below the surface of the mix.

12. Method according to Claim 11, **characterized in that** said pointed elements are part of a tool in the form of rake, made to perform a roto-translatory/undulating movement, so that the points perform a remixing action below the surface of the mix.

13. Method according to Claim 2, **characterized in that** said dye is in solid form and an inert material is added to it.

14. Method according to Claim 13, **characterized in that** said inert material consists of a granulate having the same nature as that forming the said starting mix.

15. Method according to Claim 1, **characterized in that** irregular grooves or roughness are produced in the surface of said mix layer before said random and patch-like deposition of dye.

## Patentansprüche

1. Verfahren zur Herstellung von plattenartigen Produkten aus einer aus einem Granulat aus Natursteinmaterial und einem zementartigen oder synthetischen Bindemittel bestehenden Mischung, in welcher eine Mischschicht auf einem temporär formgebenden Träger, bevorzugt einer wannenartigen Gummiform, gebildet wird, und die Schicht einer Vibrationsverdichtung unter Vakuum und dann je nach Art des Bindemittels Abbindungs- und Härtungsschritten unterzogen wird, **dadurch gekennzeichnet, dass** vor den Vibrationsverdichtungs- und Härtungsschritten der Farbstoff, in einer aus einem flüssigen Farbstoff und einem Pulver-Farbstoff ausgewählten Form, auf der oberen Fläche der Startmischung verteilt wird, welche ihrerseits in Form einer Schicht gleichmäßiger Dicke auf der Wannenform oder einem anderen formgebenden Träger verteilt wird, wobei die Verteilung des Farbstoffs zufällig und stellenweise ist und derart ausgeführt wird, dass der Farbstoff keine Agglomerationen bildet, sondern verteilt ist.

2. Verfahren gemäß Anspruch 1, **dadurch gekennzeichnet, dass** der Farbstoff aus einem flüssigen Farbstoff und einem festen Farbstoff in Pulverform ausgewählt wird.

3. Verfahren gemäß Anspruch 2, **dadurch gekennzeichnet, dass** der Farbstoff in flüssiger Form vorliegt und verwendet wird, wenn das die Startmischung bildende Bindemittel ein Harz ist.

4. Verfahren gemäß Anspruch 3, **dadurch gekennzeichnet, dass** der flüssige Farbstoff eine sehr fluide, mit dem Bindemittelharz kompatible. Verbindung ist, die vorher in einer bekannten Weise gefärbt wurde, um sie mit der gewünschten Farbe zu versehen.

5. Verfahren gemäß Anspruch 4, **dadurch gekennzeichnet, dass** die sehr fluide Verbindung reaktionsfähig mit dem Bindemittel-Harz ist.

6. Verfahren gemäß Anspruch 4, **dadurch gekennzeichnet, dass** der flüssige Farbstoff aus irgendeinem der folgenden gewählt wird: Vinyl-Monomere, Acryl-Monomere, Polyesterharze und Acrylharze sowie Mischungen davon, wobei die Harze eine für die Anforderungen von Applikation mittels Sprühen geeignete Viskosität aufweisen.

7. Verfahren gemäß Anspruch 4 oder 5, **dadurch gekennzeichnet, dass** der flüssige Farbstoff aus einer Mischung von gefärbtem Monomer und dem Bindemittelharz besteht.

8. Verfahren gemäß Anspruch 7, **dadurch gekennzeichnet, dass** das Monomer Styrol und das Bindemittel-Harz Polyesterharz ist.

9. Verfahren gemäß Anspruch 8, **dadurch gekennzeichnet, dass** der flüssige Farbstoff aus einer 35% an Styrol-Monomer und 65% Polyester-Harz umfassenden Mischung besteht.

10. Verfahren gemäß Anspruch 2, **dadurch gekennzeichnet, dass** vorher kein Härtungskatalysator zu dem Farbstoff zugegeben wird, welcher stattdessen zur Härtung den Katalysator des die Startmischung bildenden Bindemittel-Harzes verwendet.

11. Verfahren gemäß Anspruch 2, **dadurch gekennzeichnet, dass** vor Durchführung der Vibrationsverdichtung, aber nach der Applikation des Farbstoffs, der in der Form von Stellen oder Flecken auf der Oberfläche der Mischschicht verteilt ist, die in der Form oder dem temporär formgebenden Träger abgelagert wurde, die Oberfläche der Mischung der Einwirkung von spitzen Elementen, welche unter die Oberfläche der Mischung abgesenkt wurden, unterzogen wird.

12. Verfahren gemäß Anspruch 11, **dadurch gekennzeichnet, dass** die spitzen Elemente Teil eines Werkzeugs in Form einer Harke sind, so gemacht, dass eine Rotations-Translations-/Wellenbewegung ausgeführt wird, so dass die Spitzen einen Abmischvorgang unter der Oberfläche der Mischung ausführen.

13. Verfahren gemäß Anspruch 2, **dadurch gekennzeichnet, dass** der Farbstoff in fester Form vorliegt und ihm ein inertes Material zugegeben wird.

14. Verfahren gemäß Anspruch 13, **dadurch gekennzeichnet, dass** das inerte Material aus einem Granulat besteht, das die gleiche Art wie das, das die Startmischung bildet, aufweist.

15. Verfahren gemäß Anspruch 1, **dadurch gekennzeichnet, dass** vor der zufälligen und stellenartiges Ablagern des Farbstoffs unregelmäßige Rillen oder Rauhigkeit in der Oberfläche der Mischschicht erzeugt werden.

## Revendications

1. Procédé pour la fabrication de produits en forme de dalle à partir d'un mélange constitué de granulés de matériau en pierre naturelle et d'une résine liante synthétique ou cimentaire, dans lequel une couche de mélange est formée sur un support de formation temporaire, de préférence un moule analogue à un plateau en caoutchouc, et la couche est soumise à un compactage par vibrations sous vide et ensuite aux étapes de prise et de durcissement en fonction de la nature du liant, **caractérisé en ce que**, avant les étapes de compactage par vibrations et de durcissement, la teinture, sous une forme choisie parmi une teinture liquide et une teinture en poudre, est distribuée sur la surface supérieure du mélange de départ, qui est à son tour distribué sous la forme d'une couche ayant une épaisseur uniforme sur le moule en forme de plateau ou un autre support de formation, la distribution de la teinture étant aléatoire et en mosaïque et étant réalisée de façon que la teinture ne forme pas d'agglomérations mais soit dispersée.

2. Procédé selon la revendication 1, **caractérisé en ce que** ladite teinture est choisie parmi une teinture liquide et une teinture solide sous forme de poudre.

3. Procédé selon la revendication 2, **caractérisé en ce que** ladite teinture est sous forme liquide et est utilisée quand le liant formant le mélange de départ est une résine.

4. Procédé selon la revendication 3, **caractérisé en ce que** ladite teinture liquide est un composé très fluide, compatible avec ladite résine liante, préalablement teinte d'une manière connue de façon à fournir la couleur souhaitée.

5. Procédé selon la revendication 4, **caractérisé en ce que** ledit composé très fluide est réactif vis-à-vis de la résine liante.

6. Procédé selon la revendication 4, **caractérisé en ce que** ladite teinture liquide est choisie parmi n'importe lesquels des composés suivants : les monomères vinyliques, les monomères acryliques, les résines de polyester et les résines acryliques, ainsi que leurs mélanges, lesdites résines ayant une viscosité adaptée aux exigences d'une application par pulvérisation.

7. Procédé selon la revendication 4 ou 5, **caractérisé en ce que** ladite teinture liquide est constituée d'un mélange de monomère teint et de ladite résine liante.

8. Procédé selon la revendication 7, **caractérisé en ce que** ledit monomère est le styrène et ladite résine liante est une résine de polyester.

9. Procédé selon la revendication 8, **caractérisé en ce que** ladite teinture liquide est constituée d'un mélange comprenant 35 % de styrène monomère et de 65 % de résine de polyester.

10. Procédé selon la revendication 2, **caractérisé en ce qu'**un catalyseur de durcissement n'est pas ajouté à l'avance à ladite teinture liquide qui utilise à la place, pour le durcissement, le catalyseur de la résine liante formant le mélange de départ.

11. Procédé selon la revendication 2, **caractérisé en ce que**, avant la mise en oeuvre du compactage par vibrations, mais après l'application de la teinture liquide distribuée sous la forme d'une mosaïque ou d'éclaboussures sur la surface de la couche de mélange déposée dans le moule ou le support de formation temporaire, la surface du mélange est soumise à l'action d'éléments pointus qui sont immergés sous la surface du mélange.

12. Procédé selon la revendication 11, **caractérisé en ce que** lesdits éléments pointus font partie d'un outil ayant la forme d'une herse, conçu pour effectuer un mouvement de translation rotative/ondulation, de façon que les pointes effectuent une action de re-mélange sous la surface du mélange.

13. Procédé selon la revendication 2, **caractérisé en ce que** ladite teinture est sous forme solide, et un matériau inerte lui a été ajouté.

14. Procédé selon la revendication 13, **caractérisé en ce que** ledit matériau inerte est constitué de granulés ayant la même nature que ceux formant ledit mélange de départ.

15. Procédé selon la revendication 1, **caractérisé en ce que** des rainures irrégulières ou des rugosités sont produites dans la surface de ladite couche de mélange avant ladite déposition aléatoire ou en mosaïque de la teinture.
